# FASCICULE DE BREVET EUROPEEN

(11) **EP 1 945 493 B1**
(45) Date de publication et mention de la délivrance du brevet: **24.08.2011**
(21) Numéro de dépôt: 06808212.2
(22) Date de dépôt: 28.09.2006
(51) Int. Cl.: B62D 5/16, B62D 1/04, B62D 6/10

(54) **PROCEDE POUR DETERMINER EN TEMPS REEL LA TENUE D'UN VOLANT DE CONDUITE D'UNE DIRECTION ASSISTEE ELECTRIQUE DE VEHICULE AUTOMOBILE**
VERFAHREN ZUR ECHTZEITBESTIMMUNG DES HALTENS EINES KRAFTFAHRZEUGLENKRADS MIT ELEKTRISCHER SERVOLENKUNG
METHOD FOR DETERMINING IN REAL TIME THE GRIP ON A MOTOR VEHICLE STEERING WHEEL WITH ELECTRICAL POWER STEERING

(30) Priorité: 19.10.2005 FR 0510653
(43) Date de publication de la demande: 23.07.2008
(73) Titulaire: Jtekt Europe, 69540 Irigny (FR)
(72) Inventeur: BARTHOMEUF, Julien, F-69230 Saint Genis Laval (FR); CASSAR, Stéphane, F-69004 Lyon (FR)
(74) Mandataire: Bratel, Gérard
(86) Numéro de dépôt international: PCT/FR2006/002199
(87) Numéro de publication internationale: WO 2007/045735

(56) Documents cités:
- EP-A- 0 900 711
- EP-A- 1 508 496
- WO-A-2004/022409
- US-A- 6 114 949

## Description

La présente invention concerne, de façon générale, les véhicules automobiles équipés d'une direction assistée électrique. Plus particulièrement, cette invention s'intéresse à un procédé pour déterminer en temps réel la tenue par le conducteur d'un volant de conduite d'une direction assistée électrique de véhicule automobile.

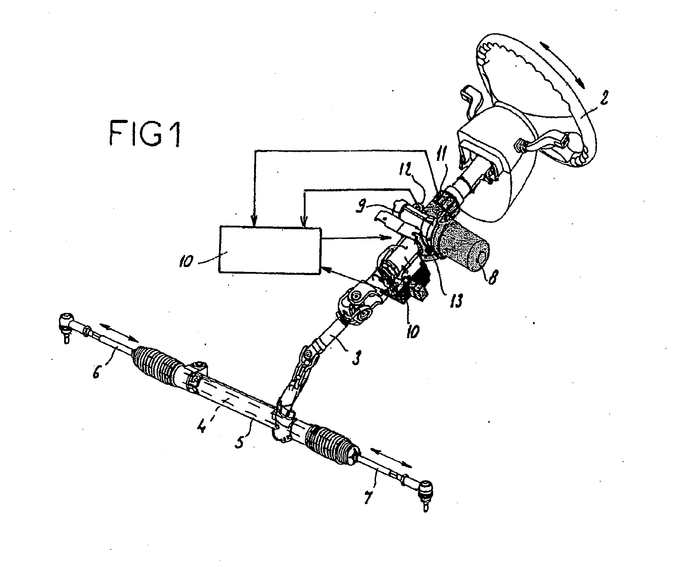

La figure 1 rappelle quels sont les principaux éléments composant un système de direction assistée électrique de véhicule automobile. Une telle direction comprend, d'une part, une partie mécanique comprenant un volant de conduite 2 lié en rotation à une colonne de direction 3, dont l'extrémité éloignée du volant 2 porte un pignon de direction en prise avec une crémaillère 4, montée coulissante dans un carter de direction 5. Les deux extrémités opposées de la crémaillère 4 sont respectivement liées, par l'intermédiaire de biellettes 6 et 7, aux roues directrices droite et gauche (non représentées) du véhicule. La direction comprend, pour assister l'effort manuel exercé par le conducteur du véhicule sur le volant 2, un moteur électrique d'assistance 8 à deux sens de rotation, dont l'arbre de sortie est accouplé, par l'intermédiaire d'un réducteur de vitesse 9 notamment à vis sans fin et roue tangente, à la colonne de direction 3, de manière à transmettre un couple moteur (éventuellement aussi un couple résistant) à cette colonne de direction 3. Le moteur électrique d'assistance 8 est piloté par un calculateur électronique embarqué 10, qui reçoit et traite divers signaux, en provenance de capteurs.

Dans une réalisation habituelle, le calculateur électronique 10 reçoit un signal électrique issu d'un capteur 11 de l'angle du volant 2, représentatif de l'angle instantané de braquage du véhicule automobile concerné, et ce calculateur 10 reçoit aussi un signal issu d'un capteur de couple 12 placé sur la colonne de direction 3, et mesurant ainsi le couple exercé par le conducteur sur le volant 2. Dans l'exemple illustré, il est encore prévu un capteur 13 de la position instantanée du moteur électrique d'assistance 8.

A partir de ces diverses informations, et éventuellement de paramètres extérieurs à la direction, tels que la vitesse du véhicule, le calculateur électronique 10 pilote le moteur électrique d'assistance 8, en définissant à tout moment un couple ou un effort d'assistance, pouvant amplifier ou au contraire compenser l'effort appliqué par le conducteur sur le volant 2, selon des "lois d'assistance" prédéfinies.

Pour assurer un confort de conduite maximal, le calculateur électronique applique différentes "stratégies" de commande de l'assistance selon les phases de conduite. En particulier, certaines stratégies doivent s'activer uniquement lorsque le conducteur ne tient pas le volant, pour, par exemple, pouvoir réaliser des calibrations en temps réel du système de direction.

Pour réaliser ces opérations, il s'avère donc nécessaire de pouvoir distinguer une tenue même très légère du volant par le conducteur, d'un lâcher total de ce dernier, par exemple à un feu rouge. Cette détection peut s'avérer nécessaire aussi bien lorsque le véhicule est à l'arrêt, que lorsqu'il roule.

Les procédés actuels permettant de détecter un lâcher ou une prise en main du volant de conduite 2 consistent en général à comparer l'amplitude du signal du capteur de couple 12 à un seuil prédéterminé. Le volant 2 est réputé lâché lorsque l'amplitude du signal de couple est inférieure à ce seuil, ou réputé tenu quand l'amplitude du signal de couple est supérieure à ce seuil.

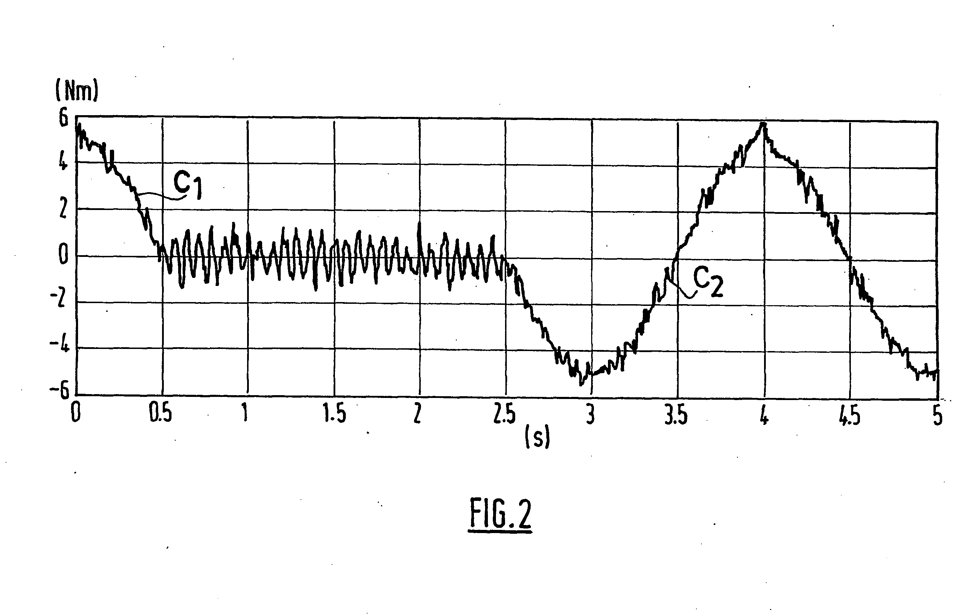

La courbe de la figure 2 montre la variation dans le temps du signal c de couple au volant du capteur 12 après un lâcher de volant (zone c1) puis une reprise en main (zone c2) avec un changement de direction par le conducteur.

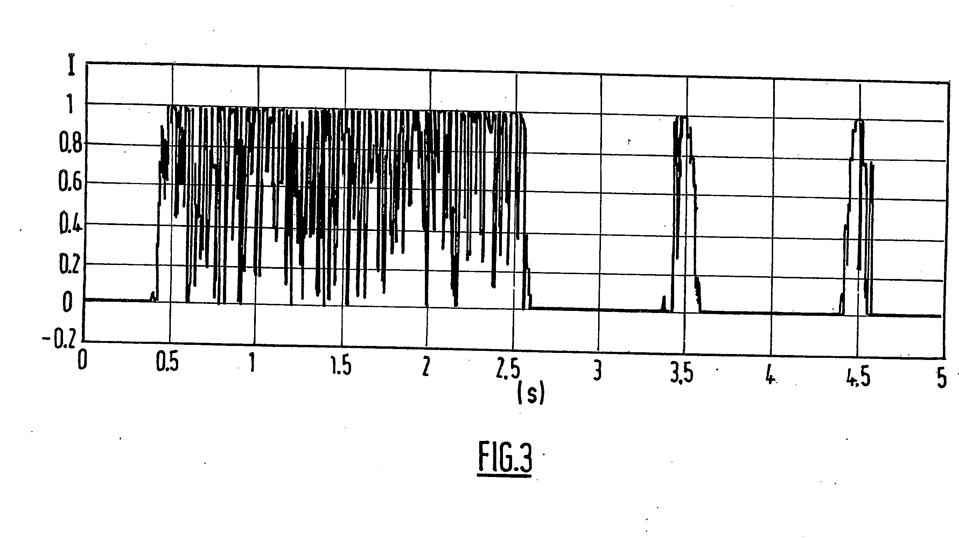

À titre d'illustration des procédés actuels de détection de tenue de volant dans leur principe, la courbe de la figure 3 montre la variation dans le temps d'un signal booléen 1 indicateur de lâcher de volant produit par un procédé de détection connu. Ce signal est activé (I=1) lorsque le signal de' couple c est dans une plage de valeurs comprises entre -1 Nm et +1 Nm.

On peut voir sur la figure 2, en particulier après le lâcher de volant (zone c1), que le signal c du capteur de couple 12 est fortement parasité par des oscillations dues à la route qui remontent jusqu'au volant 2 et sont alors mesurées par le capteur 12. Le bruit du signal de couple c se répercute alors sur le signal I indicateur de lâcher de volant (voir figure 3) et rend ce dernier quasiment inexploitable.

De même, lorsque le véhicule roule et que le conducteur tient pourtant fermement le volant, le couple exercé au volant par le conducteur peut être compensé par les efforts provenant du train de roulement du véhicule et le signal c peut entrer momentanément dans la plage comprise entre -1 et +1 Nm de sorte que le signal 1 s'active.

C'est pourquoi une simple mesure du couple au volant et sa comparaison par rapport à un seuil ne suffisent pas pour détecter avec fiabilité un lâcher ou une prise en main du volant.

La présente invention vise à éviter cet inconvénient en fournissant un procédé qui permette de déterminer de manière fiable, avec un retard aussi faible que possible, si un volant de conduite d'une direction assistée électrique de véhicule automobile est ou non tenu, afin de pouvoir exécuter, quasiment en temps réel, dès que le volant est lâché, des algorithmes de contrôle et d'assistance du système de direction.

A cet effet, l'invention a pour objet un procédé pour déterminer en temps réel la tenue d'un volant de conduite d'une direction assistée électrique de véhicule automobile, la direction comprenant un moteur électrique d'assistance piloté par un calculateur électronique embarqué, notamment à partir d'un signal de mesure du couple au volant par un capteur disposé sur la colonne de direction, en accord avec le document EP 1316494A1, caractérisé en ce que ce procéde consiste
- à filtrer le signal de couple au moyen d'un filtre passe-bas du premier ordre à une fréquence de coupure variable qui prend, respectivement, une valeur minimale ou une valeur maximale selon que l'amplitude du signal de couple est, respectivement, inférieure ou supérieure à un seuil prédéterminé qui distingue les états lâché et tenu du volant,
- puis à produire un signal indicateur, respectivement, d'un lâcher de volant ou d'une tenue de volant selon que l'amplitude du signal de couple filtré est, respectivement, inférieure ou supérieure à un seuil prédéterminé.

De manière avantageuse, la fréquence de coupure minimale du filtre est très basse, de l'ordre de 7 Hz, afin de filtrer les oscillations de la route remontées par la direction sur le volant.

La fréquence de coupure maximale du filtre est avantageusement beaucoup plus élevée que sa fréquence de coupure minimale, de l'ordre de 1000 Hz., afin d'obtenir un temps de réponse suffisamment rapide. En effet, les filtres numériques passe-bas à basse fréquence présentent un temps de réponse trop élevé pour permettre une détection assez rapide de la prise en main du volant.

Ainsi, le procédé selon l'invention fournit un signal, actualisé en permanence, qui indique en quelques dixièmes de milliseconde, si le volant est lâché ou pris en main par le conducteur.

Les signaux de tenue ou de lâcher de volant sont adressés au calculateur électronique en vue d'être traités pour le pilotage du moteur électrique d'assistance. Ils peuvent être utilisés localement dans le système de direction, mais peuvent aussi être transmis via le réseau embarqué dans le véhicule pour toute autre application, par exemple pour avertir le conducteur en cas d'endormissement, etc.

L'invention sera de toute façon mieux comprise à l'aide de la description qui suit, en référence au dessin schématique annexé illustrant, à titre d'exemple, un mode de mise en oeuvre de ce procédé.
La figure 1 (déjà commentée) est une vue en perspective, schématisée, d'une direction assistée électrique pouvant mettre en oeuvre le procédé de l'invention.
La figure 2 (déjà commentée) représente une courbe temporelle du signal de couple mesuré sur la direction de la figure 1.
La figure 3 (déjà commentée) représente une courbe temporelle d'un signal indicateur de tenue/lâcher de volant fourni par un procédé selon l'état de la technique sur la direction précédente.
La figure 4 est un schéma-bloc qui illustre un procédé à filtrage adaptatif selon l'invention.
La figure 5 représente une courbe de la fréquence de coupure du filtre de la figure 4 en fonction du signal de couple mesuré au volant.
La figure 6 représente une courbe temporelle du signal de couple filtré par le procédé de la figure 4.
La figure 7 représente une courbe d'un signal indicateur de tenue/lâcher de volant fourni par le procédé de la figure 4 en fonction du signal de couple filtré de la figure 6.
La figure 8 représente une courbe temporelle du signal indicateur de tenue/lâcher de volant de la figure 7.

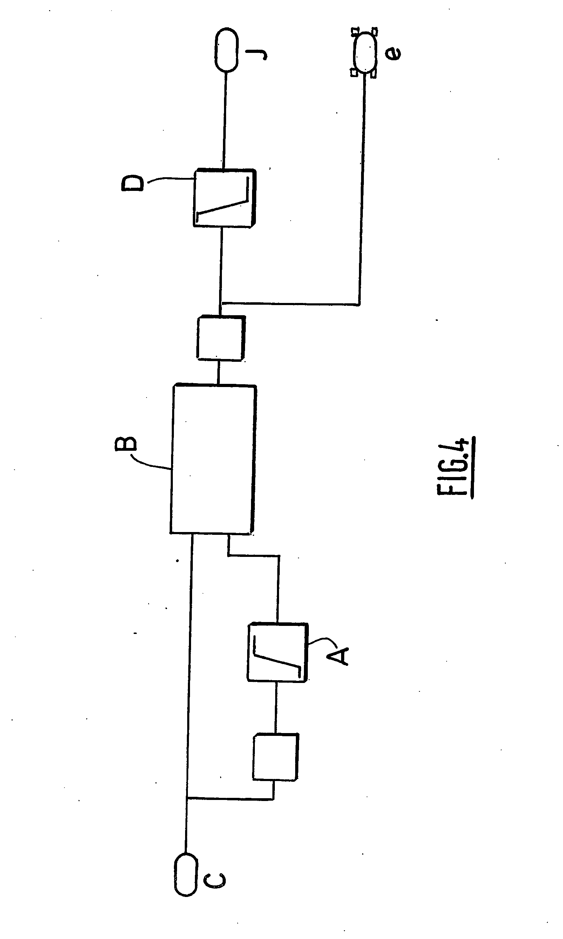

Le procédé selon l'invention est représenté sous forme de trois blocs principaux A, B et D sur la figure 4. Ce procédé consiste essentiellement à effectuer un filtrage adaptatif du signal c de couple provenant d'un capteur 12 de mesure du couple exercé sur un volant 2 de conduite d'une direction assistée électrique telle que décrite en introduction. Le filtrage adaptatif est réalisé au moyen d'un filtre passe-bas du premier ordre à fréquence de coupure f variable, symbolisé par le bloc B sur la figure 3. La valeur de la fréquence de coupure f du filtre passe-bas est déterminée par une table au niveau du premier bloc A, en fonction de l'amplitude (valeur absolue) du signal de couple c.

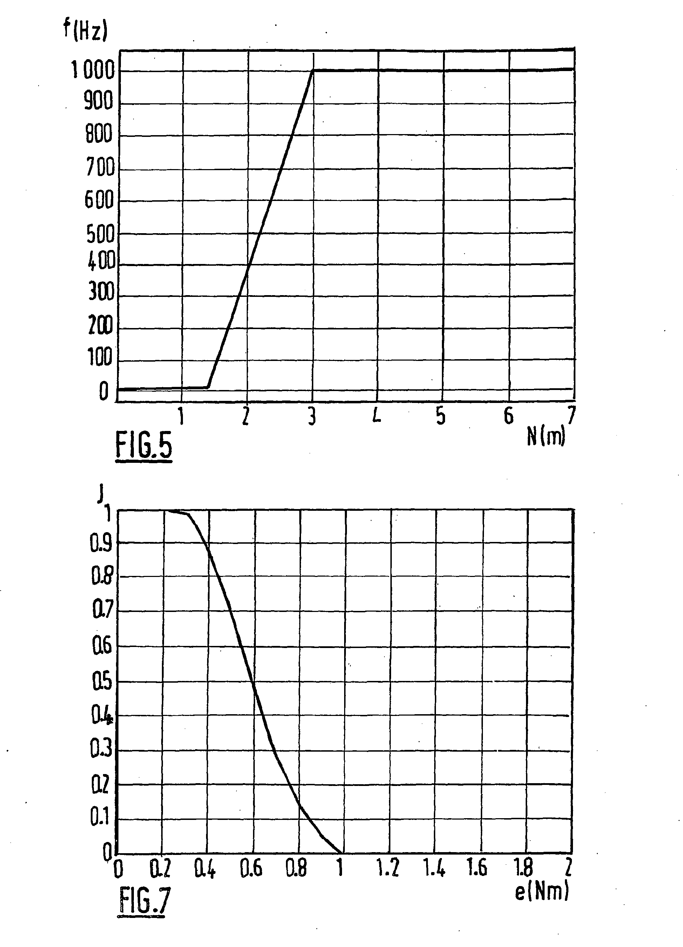

Comme indiqué sur la figure 5, la fréquence de coupure f prend une valeur minimale de l'ordre de 7 Hz lorsque l'amplitude du signal de couple c est faible, c'est-à-dire inférieure à 1,4 Nm. Quand l'amplitude du signal de couple c est comprise entre 1,4 Nm et 3 Nm, la fréquence de coupure f est proportionnelle à l'amplitude du signal de couple c. Enfin, lorsque l'amplitude du signal de couple c est forte, c'est-à-dire supérieure à 3 Nm, la fréquence de coupure f prend une valeur maximale de l'ordre de 1000 Hz, pour détecter rapidement une reprise en main du volant.

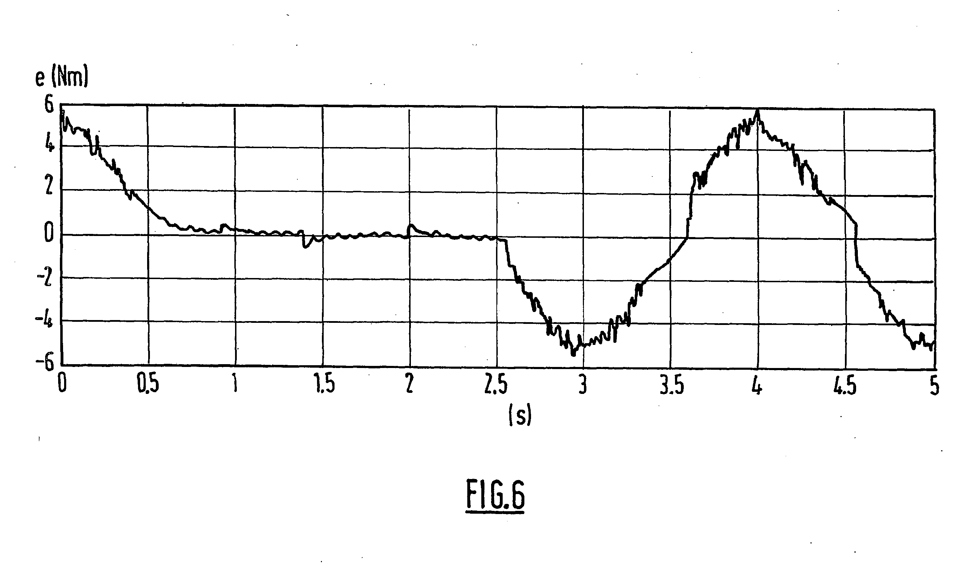

Un signal de couple filtré e, en sortie du bloc de filtrage B de la figure 3, est représenté sur la figure 6. Un signal J, compris entre 0 et 1, indicateur de tenue ou de lâcher de volant, en sortie du dernier bloc D de la figure 3, est illustré sur la figure 7. Le signal J est déterminé en fonction de l'amplitude (valeur absolue) du signal de couple filtré e. Quand l'amplitude e du signal de couple filtré est inférieure à 0,2 Nm, le signal J prend la valeur 1 et indique que le volant est lâché. Quand l'amplitude e du signal de couple filtré est supérieure à 1 Nm, le signal J prend la valeur 0 et indique que le volant est tenu.

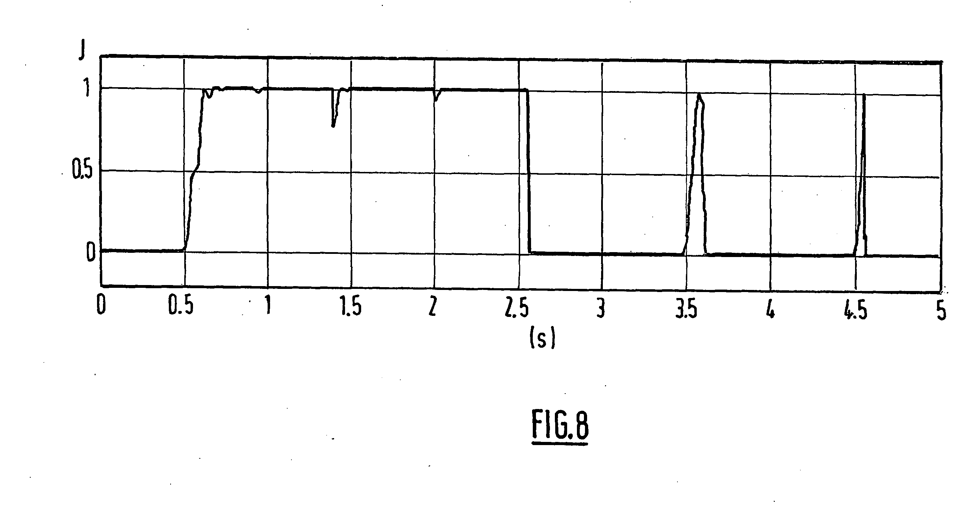

Comme le montre la figure 8, dans le cas d'un lâcher de volant (zone c1 de la figure 2), les variations du couple au volant sont filtrées et l'indicateur J présente une valeur très stable et assurément plus fiable que le signal I de la figure 3. En cas de changement de direction (zone c2 de la figure 2), l'indicateur J passe fugitivement à la valeur 1.

Contrairement aux systèmes connus de détection de tenue du volant, la solution développée par le Demandeur ne nécessite aucun capteur ou équipement supplémentaire. Seule une stratégie de commande spécifique est mise en oeuvre au niveau du calculateur électronique 10 pour obtenir cette information qui peut donc venir en complément (dans le cas d'une solution redondée) ou en remplacement des solutions de l'art antérieur.

Comme il va de soi, l'invention ne se limite pas au seul mode de mise en oeuvre de ce procédé qui a été décrit ci-dessus, à titre d'exemple ; elle en embrasse, au contraire, toutes les variantes de réalisation et d'application respectant le même principe. En particulier, les allures des diverses courbes indiquées ne sont que des exemples explicatifs, pouvant donner lieu, dans le détail, à diverses variantes et adaptations. Enfin, les moyens techniques de mise en oeuvre du procédé restent eux aussi très variables, sans que l'on s'éloigne du cadre de l'invention.

## Revendications

1. Procédé pour déterminer en temps réel la tenue d'un volant de conduite (2) d'une direction assistée électrique de véhicule automobile, la direction comprenant un moteur électrique d'assistance (8) piloté par un calculateur électronique (10) embarqué, notamment à partir d'un signal (c) de mesure du couple au volant (2) par un capteur (12) disposé sur la colonne de direction (3), **caractérisé en ce que** ce procédé consiste
- à filtrer le signal de couple (c) au moyen d'un filtre passe-bas (B) du premier ordre à une fréquence de coupure (f) variable qui occupe, respectivement, une valeur minimale ou une valeur maximale selon que l'amplitude du signal de couple (c) est, respectivement, inférieure ou supérieure à un seuil prédéterminé, puis
- à produire un signal (J) indicateur, respectivement, d'un lâcher de volant (J=1) ou d'une tenue de volant (J=0) selon que l'amplitude du signal de couple filtré (e) est, respectivement, inférieure ou supérieure à un seuil prédéterminé.

2. Procédé selon la revendication 1, **caractérisé en ce que** la fréquence de coupure minimale du filtre (B) est de l'ordre de 7 Hz.

3. Procédé selon la revendication 1 ou 2, **caractérisé en ce que** la fréquence de coupure maximale du filtre (B) est de l'ordre de 1000 Hz.

## Claims

1. A method for determining, in real time, the grip on a steering wheel (2) of an electric powerassisted steering system for automobile, the steering system comprising a power-assist electric motor (8) controlled by an onboard electronic computer (10), notably using a signal (c) from measurement of the torque on the steering wheel (2) by a sensor (12) disposed on the steering column (3), **characterized in that** this method consists:
- in filtering the torque signal (c) by means of a first-order low-pass filter (B) with a variable cutoff frequency (f) that respectively takes a minimum value or a maximum value depending on whether the amplitude of the torque signal (c) is, respectively, lower or higher than a predetermined threshold, then
- in producing a signal (J) respectively indicating release of the steering wheel (J=1) or gripping of the steering wheel (J=0) depending on whether the amplitude of the filtered torque signal (e) is, respectively, lower or higher than a predetermined threshold.

2. The method as claimed in claim 1, **characterized in that** the minimum cutoff frequency of the filter (B) is around 7 Hz.

3. The method as claimed in claim 1 or 2, **characterized in that** the maximum cutoff frequency of the filter (B) is of the order of 1000 Hz.

## Patentansprüche

1. Verfahren zur Echtzeitbestimmung des Haltens eines Lenkrads (2) einer elektrischen Servolenkung eines Kraftfahrzeugs, wobei die Lenkung einen elektrischen Servomotor (8) umfasst, der von einem eingebauten elektronischen Rechner (10) gesteuert wird, insbesondere mit einem Mess-Signal (c) des am Lenkrand (2) anliegenden Drehmoments durch einen Sensor (12), der auf der Lenksäule (3) angeordnet ist, **dadurch gekennzeichnet, dass** dieses Verfahren darin besteht,
- das Drehzahlsignal (c) mit einem Tiefpassfilter (B) erster Ordnung mit einer variablen Schnittfrequenz (f) zu filtern, die jeweils einen minimalen Wert oder einen maximalen Wert hat, je nachdem, ob die Amplitude des Drehzahlsignals (c) jeweils kleiner oder größer als ein vorbestimmter Grenzwert ist, dann
- ein Hinweissignal (J) jeweils eines Loslassens des Lenkrads (J=1) oder eines Haltens des Lenkrads (J=0) zu produzieren, je nachdem, ob die Amplitude des gefilterten Drehzahlsignals (e) jeweils kleiner oder größer als ein vorbestimmter Grenzwert ist.

2. Verfahren nach Anspruch 1, **dadurch gekennzeichnet, dass** die minimale Schnittfrequenz des Filters (B) zirka 7 Hz beträgt.

3. Verfahren nach Anspruch 1 oder 2, **dadurch gekennzeichnet, dass** die maximale Schnittfrequenz des Filters (B) zirka 1000 Hz beträgt.
